# EUROPEAN PATENT SPECIFICATION

(11) **EP 3 594 540 B1**
(45) Date of publication and mention of the grant of the patent: **06.12.2023**
(21) Application number: 18763752.5
(22) Date of filing: 06.03.2018
(51) Int. Cl.: F16K 11/078, E03C 1/10, E03B 7/08

(54) **SINGLE-LEVER TAP**
WASSERHAHN MIT EINZELHEBEL
ROBINET MONOCOMMANDE

(30) Priority: 09.03.2017 ES 201730314
(43) Date of publication of application: 15.01.2020
(73) Proprietor: Griferias Grober, S.L., 50197 Zaragoza (ES)
(72) Inventor: LADRÓN JIMÉNEZ, Roberto, 50197 Zaragoza (ES)
(74) Representative: Schäfer, Matthias W.
(86) International application number: PCT/ES2018/070165
(87) International publication number: WO 2018/162776

(56) References cited:
- WO-A1-2015/136133
- WO-A1-2015/136133
- WO-A2-2009/091135
- WO-A2-2009/091135
- CN-A- 101 387 346
- JP-A- S61 127 980
- JP-U- S6 159 997

## Description

### Object of the invention

This descriptive report refers, as its title indicates, to a single-lever tap with closing and draining functions, which is emptied by means of a perforation made in the single-lever tap in collaboration with the corresponding cartridge equipped with means of evacuating water.

The object of the invention is to achieve the release of the water retained in the water pipes towards any single-lever shower system, whether a column, flexible hose or internal or external pipe of those used habitually to conduct the water towards a sprinkler to, after the use of the single-lever tap, eliminate uncontrolled water drains, drips and the proliferation of bacteria which is commonly generated in stagnant water, such as legionella.

### Background of the invention

Currently, the water pipes installed in taps, shower columns, sprinklers, shower hoses and systems with built-in pipes, have the disadvantage that when the water inlet is closed, a small volume is retained in them. This accumulation of water can lead to the proliferation of bacteria and other microorganisms that develop easily with a high degree of humidity.

Another disadvantage that is generated in the sprinklers is that the water is retained inside, in equilibrium with the atmospheric pressure; after some time, the water is drained, rushing to the shower area, which can cause discomfort to the user.

Solutions have been sought to avoid or reduce these drawbacks, in this regard, patent P201430357 (Spanish application ES20140030357) describes a device for the distribution, opening and closing of taps, which incorporates an external water drainage hole, with the help of a water regulator or cartridge, specially adapted for thermostatic taps.

Another solution foreseen for the drainage of water can be found in the Spanish utility model U201430102 where the automatic draining device is described but only indicated for timed taps.

Document CN 101 387 346 A discloses a single-lever mixer tap with drainage means according to the preamble of claim 1.

### Description of the invention

In order to solve the current problem, a single-lever tap having the features of claim 1 has been designed.

The cartridge with side drainage means comprises:
- a drive block attached to the perforated housing of the cartridge,
- a movable ceramic disc, with a slanted cavity and linked to the drive block, and a fixed lower ceramic disc, arranged beneath the movable ceramic disc.
- where the fixed ceramic disc comprises two slanted water through-holes, positioned very close to their external diameter, and slightly separated from each other, corresponding to the cold and hot water inlet, a water outlet through-hole positioned around their geometric centre and a water drainage recess, configured as a circular segment positioned in line with the outlet hole and centred with the slanted through-holes.
- a housing with drainage grooves distributed around its contour, opposite the water drainage recess of the fixed ceramic lower disc, and
- a perforated housing closing base, comprising three openings with a sealing gasket, in communication with the holes and perforated holes in the fixed lower ceramic disc

The rotation of the movable ceramic disc determines the output of cold and/or hot water and the movement in a diametric direction of this movable disc determines the flow of water out of this pipe cartridge or contact cartridge.

The configuration of the ceramic discs corresponds to a preferential design, but design alternatives would also be valid to those known in the closure systems by ceramic discs that, with different configuration, would allow the same behaviour.

The drive of the cartridge with front or side drainage means is developed by a classic operation, so that when the drive block is activated through the corresponding handle of the single-lever tap
- the flow of cold and hot water is requested simultaneously,
- or only hot water when the drive block is turned to the left
- or only cold water when the drive block is turned to the right
- closing movement, in which cold and hot water are closed, where when the closing is complete, the water circuit for use towards the shower or outlet communicates with:
   the drainage hole, or with the water drain directing the water to the outside, through a canalisation or perforation, on the mixer tap, thus eliminating drips, uncontrolled drains and proliferations of bacteria commonly generated in stagnant water, such as legionella.

### Advantages of the invention

This single-lever tap, which is presented, offers many advantages over those currently available, the most important being that of integrating the functions of opening, closing and draining the water retained at the closing, through a perforation in the single-lever tap in collaboration with the corresponding cartridge with side drainage means, thus eliminating drips, uncontrolled drains and proliferation of bacteria commonly generated in stagnant water, such as legionella,

Another of the most important advantages is that the mixer tap, by integrating the opening, closing and draining functions into a single mechanism, also ensures that the waste water tends to evaporate quickly when the pipes come into contact with the air, thanks to the pipe or perforation on the mixer tap.

### Description of the figures

In order to better understand the object of the present invention, a preferential practical embodiment of it has been represented in the annexed drawing.
Figures -1 to 3 - show a perspective view of a single-lever tap incorporating a cartridge with front drainage means which does not form part of the present invention;
Figures -4 and 5 - show a perspective view of a single-lever tap incorporating a cartridge with side drainage means;
Figures -6 and 7 - show a perspective view and section of the cartridge with front drainage means which does not form part of the present invention;
Figures -8 and 9- show a perspective view of the cartridge ceramic discs with front drainage means which does not form part of the present invention;
Figures -10 to 15- show a detailed view of the operation of the ceramic discs of the cartridge with front drainage means which does not form part of the present invention;
Figures -16 and 17 - show a perspective view and section of the cartridge with side drainage means;
Figures -18 and 19- show a perspective view of the ceramic cartridge discs with side drainage means;
Figures -20 to 25- show a detailed view of the operation of the ceramic discs of the cartridge with side drainage means.

### Embodiments

Preferential practical embodiments have been represented in the annexed drawings.

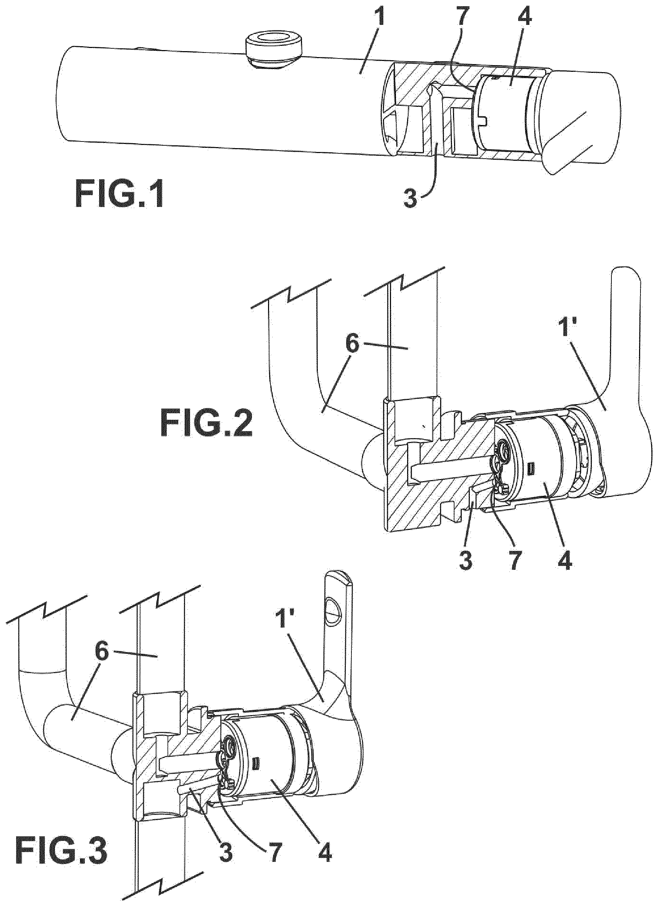

Figure 1 shows a single-lever shower tap (1) incorporating a cartridge with front drainage means (4), indicating the pipe (3) in communication with the outside for the drainage of water retained in the pipes, through a drainage hole (7) of the cartridge with front drainage means (4).

Figure 2 shows a concealed single-lever shower tap (1') incorporating a cartridge with front drainage means (4), indicating the pipe (3) in communication with the outside for the drainage of water retained in the pipes, through a drainage hole (7) of the cartridge with front drainage means (4), also showing the water inlet and outlet pipes (6).

Figure 3 shows a concealed single-lever shower tap (1') incorporating a cartridge with front drainage means (4), indicating the pipe (3) in communication with the general drain for draining the water retained in the pipes, through a draining hole (7) of the cartridge with front drainage means (4), also showing the water inlet and outlet pipes (6).

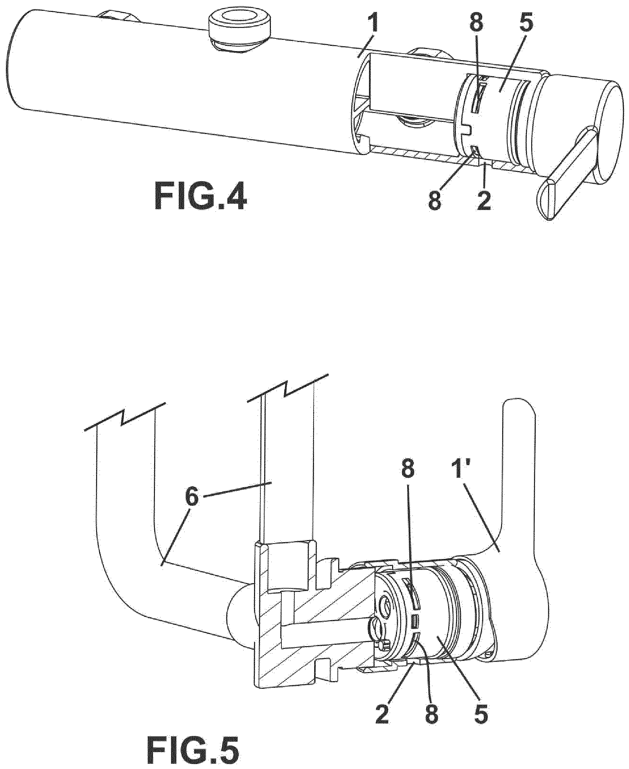

Figure 4 shows a single-lever shower tap (1) incorporating a cartridge with side drainage means (5), indicating a perforation (2) in communication with the outside for the drainage of the water retained in the pipes, through slots (8) of the cartridge with side drainage means (5)

Figure 5 shows a concealed single-lever shower tap (1') incorporating a cartridge with side drainage means (5), indicating the perforation (2) in communication with the outside for draining the water retained in the pipes, through slots (8) of the cartridge with side drainage means (5), also showing the water inlet and outlet pipes (6).

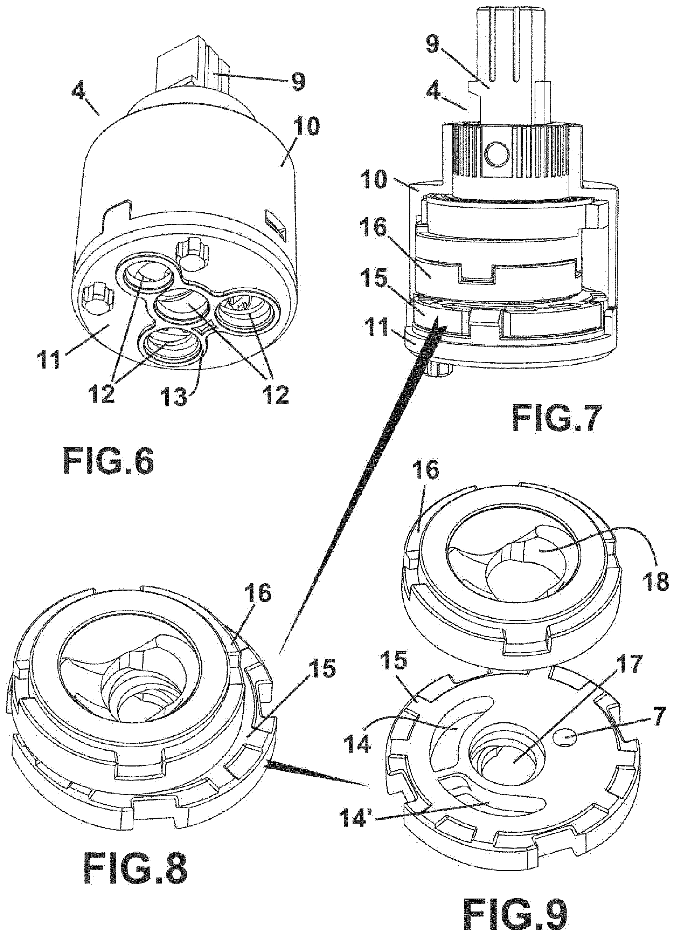

Figure 6 shows the cartridge with front drainage means (4), indicating a drive block (9), a housing (10) and closing base (11) of the housing (10)

On the closing base (11) of the housing (10), four openings (12) are marked with a sealing gasket (13) in communication with the through-holes of the fixed ceramic disc (15).

Figure 7 shows the cartridge sectioned with front drainage means (4), indicating the drive block (9) coupled to the housing (10) and coupled with the movable ceramic disc (16) and fixed ceramic disc (15) arranged below the movable ceramic disc (16), also indicating the coupling of the fixed ceramic disc (15) with the closing base (11) of the housing (10).

Figure 8 shows a construction detail of the coupling between the movable ceramic disc (16) and the fixed ceramic disc (15).

Figure 9 illustrates the fixed ceramic disc (15) pointing to a slanted through-hole (14) for hot water inlet and (14') for cold water inlet, positioned very close to their outer diameter, and slightly separated from each other, a water outlet through-hole (17) around their geometric centre and a water drainage through-hole (7), positioned in line with the outlet through-hole (17) and centred with the slanted through-holes (14 and 14') for water inlet.

Also illustrated is the movable ceramic disc (16) comprising a slanted cavity (18), which, when the drive block (9) is at rest or closed, is positioned centred with the water outlet through-hole (17) and the retained water drain through-hole (7), so that after the use of a single-lever tap (1-1'), when the tap is closed, the water retained in the pipes would come out through a pipe (3) or perforation (2), shown in Figures 1 to 5.

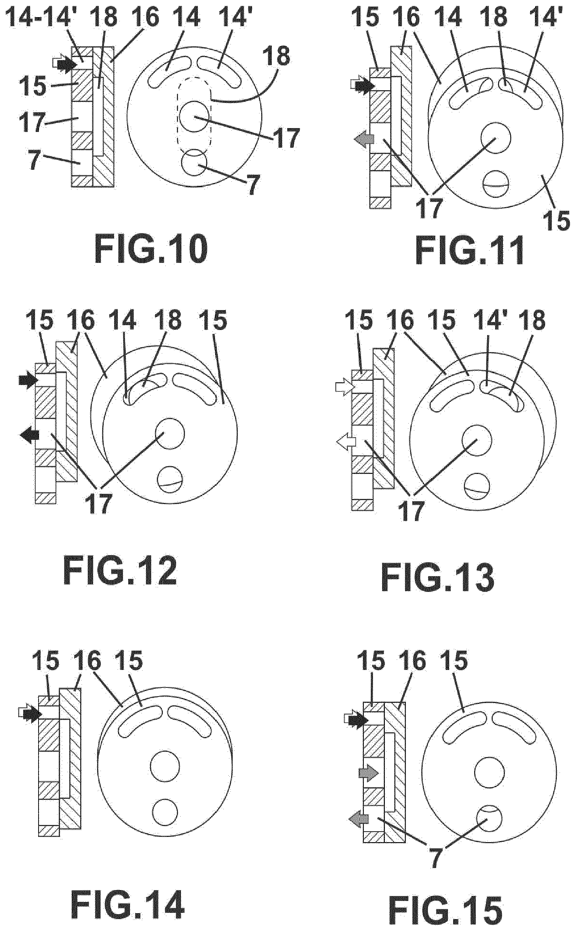

Figures 10 to 15 illustrate the different drive sequences between the movable ceramic disc (16) and the fixed ceramic disc (15) of the single-lever tap which incorporates a cartridge with front drainage means (4), indicating the hot water inlet with a black arrow, the cold water inlet represented by a white arrow and the mixed water represented by a grey arrow.

Marking the slanted through-holes (14 and 14'), the outlet through-hole (17), the drainage through-hole (7) and the cavity (18) of the movable ceramic disc (16).

Figure 10 shows a basic position with the movable ceramic disc (16) closing the hot and cold water inlet and with non-return outlet, in a situation after the last water draining.

Figure 11 shows a classic sequence, where only the simultaneous flow of hot and cold water is required, allowing water to pass through the slanted holes (14 and 14') and water to exit through the through-hole (17).

Figure 12 shows a classic sequence, where only hot water is requested, allowing water to pass through the slanted through-hole (14) and hot water to pass through the through-hole (17).

Figure 13 shows a classic sequence, where only cold water is requested, allowing water to pass through the slanted through-hole (14') and cold water to pass through the outlet through-hole (17).

Figure 14 shows a sequence in a closing movement, at which time the cold and hot water are closed, the water being retained in the pipes of the mixer tap, with the drainage through-hole (7) remaining closed.

Figure 15 shows a sequence at the moment of completing the closing, when the water circuit in use towards the shower or outlet communicates with the inlet drainage hole (7) directing the water to the outside through a pipe (3) on the mixer tap (1-1').

Figure 16 shows the cartridge with side drainage means (5), indicating a drive block (9), a housing (19) and closing base (20) of the housing (19)

The housing (19) has slots (8) for the drainage of water, positioned around the contour of the housing (19).

On the closing base (20), three openings (12) with sealing gasket (21) are indicated, these openings (12) being opposite each other, with the holes and through-holes of the fixed lower ceramic disc (22).

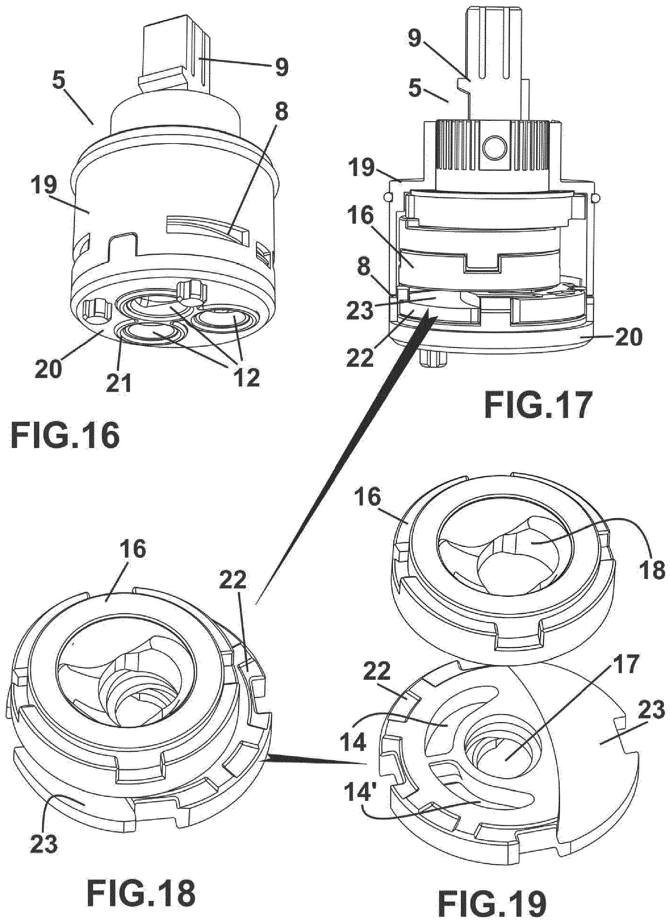

Figure 17 shows the cartridge sectioned with side drainage means (5), indicating the drive block (9) coupled to the housing (19) and coupled with the movable ceramic disc (16) and fixed lower ceramic disc (22), also indicating the coupling of the fixed lower ceramic disc (22) with the closing base (20) of the housing (19).

The water drain (23) of the fixed lower ceramic disc (22), aligned with the slots (8) of the housing (19), is also indicated in order to facilitate the drainage of water retained to the outside in collaboration with the movable ceramic disc (16).

Figure 18 shows a construction detail of the coupling between the movable ceramic disc (16) and the fixed lower ceramic disc (22), indicating the water drain (23).

Figure 19 illustrates the fixed lower ceramic disc (22) pointing to a slanted through-hole (14) for hot water inlet and (14') for cold water inlet, positioned very close to their outer diameter, and slightly separated from each other, a water outlet through-hole (17), around their geometric centre and an water drain (23), positioned in line with the outlet through-hole (17) and centred with the slanted through-holes (14 and 14') for water inlet.

The movable ceramic disc (16) is also illustrated showing a slanted cavity (18), which, when the drive block (9) is at rest or closed, is positioned centred with the water drainage through-hole (7) and with the water drain (23), so that after the use of a mixer tap (1-1'), when the cartridge is closed, the water would come out inlet slots (8) in the housing (19) of the cartridge with means of side draining (5), these slots (8) being in communication with a hole (2) in a mixer tap (1-1').

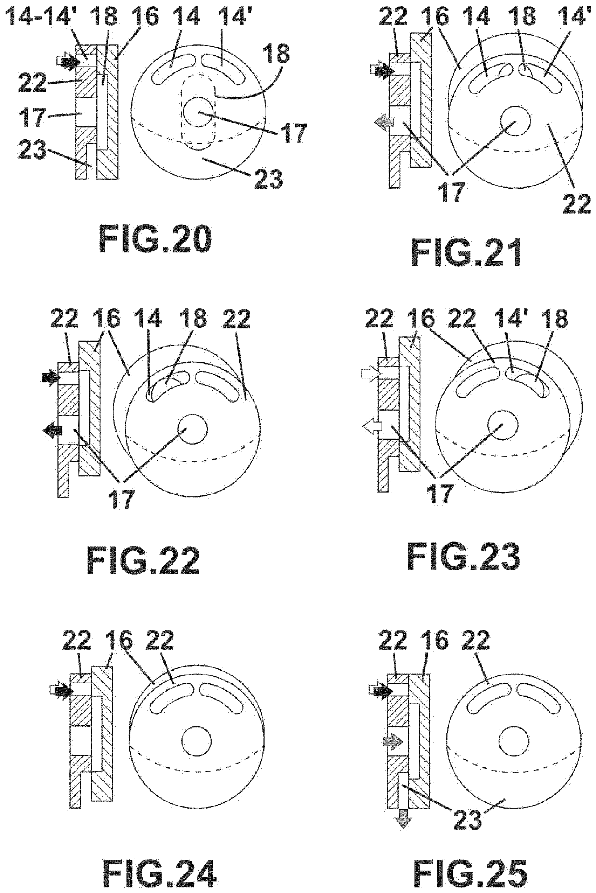

Figures 20 to 25 illustrate the different drive sequences of the movable ceramic disc (16) and fixed lower ceramic disc (22), of the single-lever tap that incorporates a cartridge with side drainage means (5), indicating the hot water inlet with a black arrow, the cold water inlet represented by a white arrow and the mixed water represented by a grey arrow.

Marking the through-holes (14 and 14'), the outlet through-hole (17), the water drain (23) and the slanted cavity (18) of the movable ceramic disc (16).

Figure 20 shows a basic position with the movable ceramic disc (16) closing the hot and cold water inlet and with non-return outlet, in a situation after the last water draining.

Figure 21 shows a classic sequence, where only the simultaneous flow of hot and cold water is required, allowing water to pass through the slanted holes (14 and 14') and water to exit through the through-hole (17).

Figure 22 shows a classic sequence, where only hot water is requested, allowing water to pass through the slanted through-hole (14) and hot water to pass through the through-hole (17).

Figure 23 shows a classic sequence, where only cold water is requested, allowing water to pass through the slanted through-hole (14') and cold water to pass through the outlet through-hole (17).

Figure 24 shows a sequence in a closing movement, at which time the cold and hot water are closed, the water being retained in the pipes of the mixer tap, with the drainage through-hole (23) remaining closed.

Figure 25 shows a sequence at the moment of completing the closing, when the water circuit in use towards the shower or outlet communicates with the water drain (23) directing the water to the outside, through slots (8) in the housing (19) and with the help of a perforation (2) on a mixer tap (1-1').

Experts in the art will easily understand that the characteristics of different embodiments can be combined with characteristics of other possible embodiments whenever such a combination is technically possible and falls under the scope of the appended claims.

## Claims

1. - Single-lever tap (1; 1'), normally used for showers or built-in installations, wherein it includes means for opening and closing the water outlet and draining the single-lever tap, incorporating a perforation (2) being different from the water outlet for the external drainage of the water retained in the pipes, and wherein it further includes a cartridge with drainage means (5), the cartridge comprising a drive block (9) coupled in a housing (19), a movable ceramic disc (16) linked to the drive block and to a fixed lower ceramic disc (22) and a closing base (20) with three openings (12) and sealing gasket (21), wherein
the fixed lower ceramic disc (22), comprises a through-hole (14) for hot water inlet and a through-hole (14') for cold water inlet, positioned very close to their external diameter, and slightly separated from each other, a through-hole for water outlet (17), positioned around its geometric centre and a water drain (23), **characterised in that** the drainage means are side drainage means, that the water drain (23) on the fixed lower ceramic disc (22) is configured as a circular segment, positioned in line with the outlet through-hole (17) and centred with the slanted through-holes (14 and 14') of the water inlet, and that the movable ceramic disc (16) comprises a slanted cavity (18), centred with a water drainage through-hole (7) and with the water drain (23), wherein the water drain (23) of the fixed lower ceramic disc (22) communicates to the outside through slots (8) positioned around the contour of the housing (19) in communication with a perforation (2) in the single-lever tap (1-1').

## Patentansprüche

1. Einhebel-Wasserhahn (1; 1'), der normalerweise für Duschen oder Einbauinstallationen verwendet wird, wobei er Mittel zum Öffnen und Schließen des Wasserauslasses und zum Entleeren des Einhebel-Wasserhahns aufweist, umfassend eine von dem Wasserauslass verschiedene Perforation (2) zum externen Entleeren des in den Rohren aufgestauten Wassers, und wobei er ferner eine Kartusche mit Entleerungsmitteln (5) aufweist, wobei die Kartusche einen in einem Gehäuse (19) gekoppelten Antriebsblock (9), eine mit dem Antriebsblock und einer festen unteren Keramikscheibe (22) verbundene bewegliche Keramikscheibe (16) und ein Verschlussunterteil (20) mit drei Öffnungen (12) und einer Dichtung (21) aufweist, wobei die feste untere Keramikscheibe (22) ein Durchgangsloch (14) für Warmwassereinlass und ein Durchgangsloch (14') für Kaltwassereinlass, die sehr nahe an ihrem Außendurchmesser positioniert und geringfügig voneinander getrennt sind, ein Durchgangsloch für Wasserauslass (17), das um ihre geometrische Mitte herum positioniert ist, und einen Wasserablauf (23) aufweist,
**dadurch gekennzeichnet, dass** die Entleerungsmittel seitliche Entleerungsmittel sind, dass der Wasserablauf (23) auf der festen unteren Keramikscheibe (22) als Kreissegment ausgelegt ist, das auf das Auslass-Durchgangsloch (17) ausgerichtet positioniert und mit den schrägen Durchgangslöchern (14 und 14') des Wassereinlasses zentriert ist, und dass die bewegliche obere Keramikscheibe (16) einen schrägen Hohlraum (18) aufweist, der mit einem Wasserentleerung-Durchgangsloch (7) und mit dem Wasserablauf (23) zentriert ist, wobei der Wasserablauf (23) der festen unteren Keramikscheibe (22) durch die um den Umfang des Gehäuses (19) herum in Kommunikation mit einer Perforation (2) in dem Einhebel-Wasserhahn (1, 1') positionierten Schlitze (8) nach außen kommuniziert.

## Revendications

1. Robinet monocommande (1 ; 1'), utilisé normalement pour des douches ou des installations encastrées, dans lequel il comporte un moyen pour ouvrir et fermer la sortie d'eau et purger le robinet monocommande, incorporant une perforation (2) qui est différente de la sortie d'eau pour la purge externe de l'eau retenue dans les canalisations, et dans lequel il comporte en outre une cartouche avec un moyen de purge (5), la cartouche comprenant un bloc d'entraînement (9) couplé dans un boîtier (19), un disque céramique mobile (16) relié au bloc d'entraînement et à un disque céramique inférieur fixe (22) et une base de fermeture (20) avec trois ouvertures (12) et un joint d'étanchéité (21), dans lequel le disque céramique inférieur fixe (22) comprend un trou débouchant (14) pour l'entrée d'eau chaude et un trou débouchant (14') pour l'entrée d'eau froide, positionnés à proximité immédiate de leur diamètre externe, et légèrement séparés l'un de l'autre, un trou débouchant pour la sortie d'eau (17), positionné autour de son centre géométrique et un purgeur d'eau (23),
**caractérisé en ce que** le moyen de purge est un moyen de purge latéral, **en ce que** le purgeur d'eau (23) sur le disque céramique inférieur fixe (22) est configuré sous la forme d'un segment circulaire, positionné en ligne avec le trou débouchant de sortie (17) et centré avec les trous débouchants inclinés (14 et 14') de l'entrée d'eau, et **en ce que** le disque céramique mobile (16) comprend une cavité inclinée (18), centrée avec un trou débouchant de purge d'eau (7) et avec le purgeur d'eau (23), dans lequel le purgeur d'eau (23) du disque céramique inférieur fixe (22) communique vers les fentes débouchantes extérieures (8) positionnées autour du contour du boîtier (19) en communication avec une perforation (2) dans le robinet monocommande (1-1').
